# EUROPÄISCHE PATENTSCHRIFT

(11) **EP 0 744 527 B1**
(45) Veröffentlichungstag und Bekanntmachung des Hinweises auf die Patenterteilung: **11.07.2001**
(21) Anmeldenummer: 95107863.3
(22) Anmeldetag: 23.05.1995
(51) Int. Cl.: E21B 47/12, E21B 7/06, G01F 1/115, G01F 1/10

(54) **Verfahren und Vorrichtung zur Übertragung von Informationen an einen untertägigen Informationsempfänger**
Method and apparatus for the transmission of information to a downhole receiver.
Procédé et appareil pour la transmission d'informations à un récepteur de fond de puits.

(43) Veröffentlichungstag der Anmeldung: 27.11.1996
(73) Patentinhaber: BAKER HUGHES INCORPORATED, Houston Texas 77210-4740 (US)
(72) Erfinder: Oppelt, Joachim, D-30659 Hannover (DE); Heisig, Gerald, D-38106 Braunschweig (DE)
(74) Vertreter: Busse & Busse Patentanwälte

(56) Entgegenhaltungen:
- EP-A- 0 377 378
- EP-A- 0 617 196
- WO-A-94/29572
- US-A- 3 636 392
- US-A- 3 800 277
- US-A- 4 461 359
- US-A- 4 471 843

## Beschreibung

Die Erfindung bezieht sich auf ein Verfahren und auf eine Vorrichtung zur Übertragung von obertägig vorliegenden Informationen an einen untertage in einem Bohrloch befindlichen Informationsempfänger gemäß dem Oberbegriff der Ansprüche 1 bzw. 7.

Nächstliegender Stand der Technik wird in der US-A-4,471,843 gesehen, die ein derartiges Verfahren und derartige Vorrichtung offenbart.

Bei einem weiteren bekannten Verfahren dieser Art (US-A-5,332,048) wird der von der Spülungspumpe erzeugte Volumenstrom des Spülungsmittels durch sequentielles Ein- und Abschalten der Spülungspumpe verändert. Der Sensor ist dabei als Strömungsschalter ausgebildet, der den Informationsempfänger über den Ein/Aus-Zustand der Spülungsströmung informiert, der dann die Schaltsignale unter Berücksichtigung ihrer zeitlichen Aufeinanderfolge weiterverarbeitet. Auf diese Weise übermittelte und verarbeitete Informationen können dann entsprechende Folgeaktionen, beispielsweise die Vorgabe einer veränderten Bohrrichtung für ein Richtbohrwerkzeug, auslösen.

Das aufeinanderfolgende Aus- und Wiedereinschalten der Spülungspumpe bzw. -pumpen setzt diese samt ihrem Antrieb starken Beanspruchungen aus, die erheblichen Verschleiß zur Folge haben. Zugleich aber wird der Bohrbetrieb durch Unterbrechen des Bohrvorganges während der Informationsübermittlung beeinträchtigt, die den Bohrfortschritt und die Standzeit des Bohrkopfes unabhängig davon mindern, welche spezielle Ausbildung dieser hat. Dies gilt insbesondere bei Vorgängen der Informationsübermittlung, die wegen der zu übertragenden Datenmenge erhebliche Zeit in Anspruch nehmen.

Die Erfindung befaßt sich mit dem Problem einer präzise und mit geringer Beeinträchtigung des Bohrbetriebs ausführbaren Informationsübermittlung an einen untertägigen Informationsempfänger, die zu ihrer Durchführung mit einfachen, weitgehend verschleißfrei arbeitenden Mitteln auskommt.

Die Erfindung löst das Problem durch ein Verfahren mit den kennzeichnenden Merkmalen des Anspruchs 1 und durch eine Vorrichtung mit den kennzeichnenden Merkmalen des Anspruchs 7. Hinsichtlich wesentlicher weiterer Ausgestaltungen wird auf die Ansprüche 2 bis 6 und 8 bis 16 verwiesen.

Verfahren und Vorrichtung nach der Erfindung belassen die Spülungspumpe bzw. -pumpen in unverändertem Betriebszustand während der Informationsübermittlung, so daß diese stets unter optimalen Bedingungen arbeiten. Die Beeinflussung des von der Spülungspumpe erzeugten gleichbleibenden Volumenstroms unabhängig vom Pumpenbetrieb ermöglicht Volumenstromveränderungen mit einem pulsförmigen Verlauf, der von den Anlauf- und Abschaltcharakteristika der Pumpe(n) unabhängig ist und lediglich übermittlungstechnische Parameter zu berücksichtigen hat. Da während Informationsübertragungszeiträumen Spülmittel in einem stetigen, lediglich schwankenden Volumenstrom zirkuliert, sind eine ausreichende Abförderung von Bohrklein aus dem Schneidbereich des Bohrkopfes sowie die Kühlung seiner Schneidglieder gewährleistet, so daß der Bohrvorgang auch bei größeren Zeiträumen für eine Informationsübermittlung ohne Beeinträchtigungen fortgesetzt werden kann. Da die Frequenz, die Amplitude und der Flankenverlauf der Änderungspulse des Volumenstroms des Spülungsmittels weitgehend frei gewählt und miteinander verknüpft werden können, ist eine zuverlässige Informationsübermittlung auch dann gewährleistbar, wenn während der erfindungsgemäßen Datenübertragung zu einem untertägigen Informationsempfänger gleichzeitig von einem untertägigen Informationsgeber Informationen an einen obertägigen Informationsempfänger übermittelt werden.

Die benötigten baulichen Mittel beschränken sich auf eine einfache, gesteuerte Abzweigleitung, die nahezu verschleißfrei betreibbar ist, und auf ein Volumenstrommeßgerät, das ebenfalls mit geringem Bauaufwand realisierbar ist. Die Ausbildung des Volumenstrommeßgerätes als *von* der Spülungsmittelströmung im Bohrstrang beaufschlagte Turbine mit einem Meßwertgeber in Gestalt eines von der Turbine angetriebenen Generators erlaubt eine besonders genaue Erfassung von Volumenstromänderungen, während gleichzeitig der Aufwand minimiert ist, da die Turbine mit dem Generator zugleich als unterirdische Spannungsquelle für den Betrieb elektrischer bzw. elektronischer Verbraucher einsetzbar ist.

Weitere Einzelheiten und Vorteile der Erfindung ergeben sich aus der Beschreibung und der Zeichnung, in der ein Ausführungsbeispiel des Gegenstands der Erfindung näher veranschaulicht ist. In der Zeichnung zeigen:
- Fig. 1: eine schematische Gesamtdarstellung einer Bohranlage mit vergrößerten Teilbereichen,
- Fig. 2: in einer Einzeldarstellung eine abgewandelte Ausführung der Steuerung des Absprerrorgans in der Abzweigleitung,

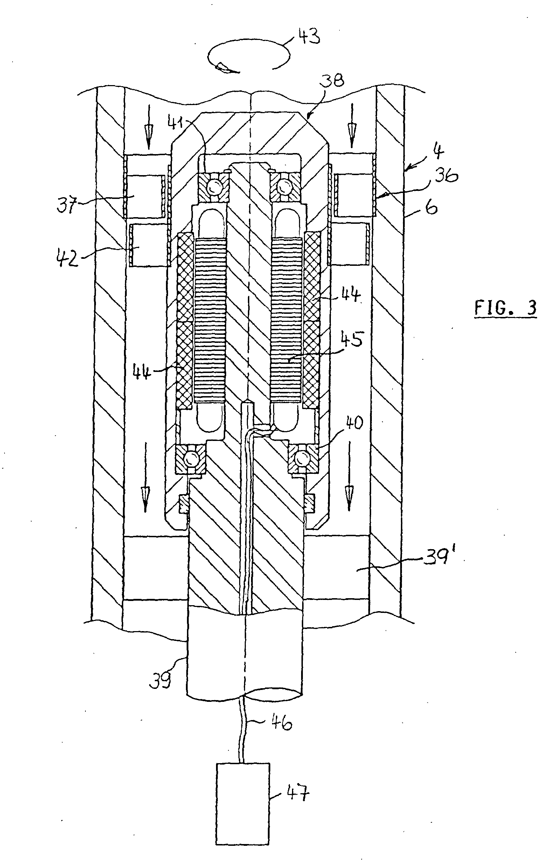

- Fig. 3: einen abgebrochenen Teilschnitt durch das Bohrwerkzeug im Bereich des Informationsempfängers,
- Fig. 4: eine Darstellung des pulsförmigen Verlaufs einer erfindungsgemäßen Volumenstromänderung bei der Signalübertragung,
- Fig. 5: eine abgewandelte Gestaltung des Pulsverlaufes, und
- Fig. 6: ein Diagramm zur Veranschaulichung der Wicklungsspannung des Generators über der Zeit.

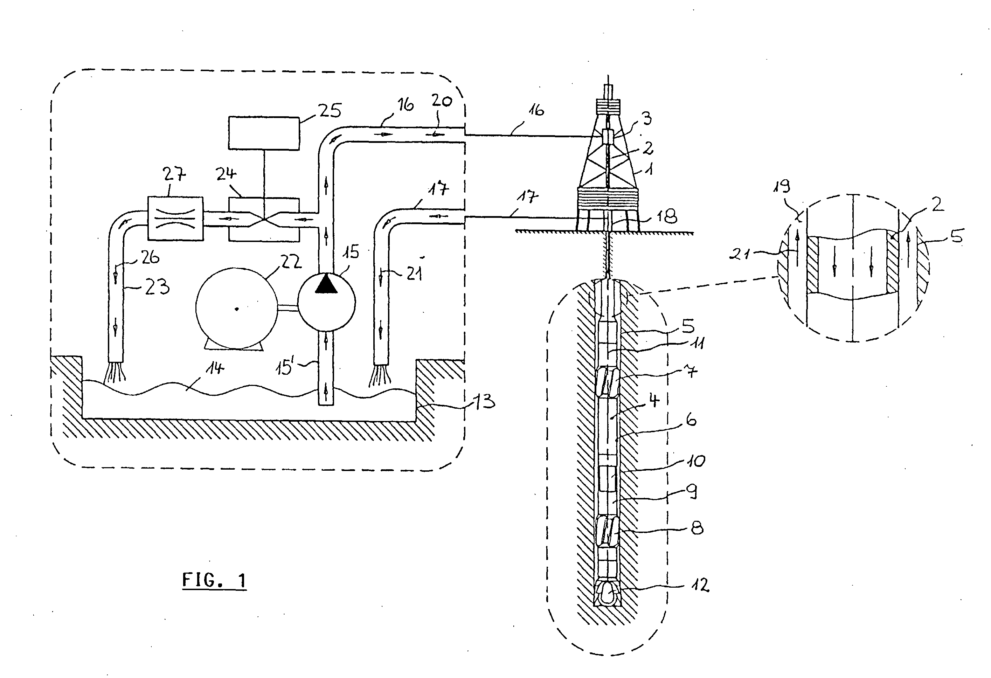

Die Fig. 1 veranschaulicht eine Bohranlage zur Durchführung einer Bohrung in unterirdischen Formationen mit einem Bohrturm 1 zum Aufbau und Antrieb eines Bohrstranges 2, der an seinem jeweiligen oberen Ende 3 mit einem Spülkopf 3 und an seinem unteren Ende mit einem Bohrwerkzeug 4 versehen ist. Das im Bohrloch 5 befindliche Bohrwerkzeug weist ein Gehäuse 6, Stabilisatoren 7, 8 und einen Bereich 9 mit gesteuert aus- und einfahrbaren Stabilisatiorippen 10 auf. Der Bereich 9 ist relativ zum Gehäuse 6 um die Werkzeugachse 11 drehbar auf diesem gelagert und im Betrieb im Bohrloch 5 verdrehfest angeordnet, während das Bohrwerkzeug 4 mitsamt dem Bohrkopf 12, beispielsweise einem Drehbohrmeißel oder Rollenmeißel, mittels des Bohrstranges 2 in Drehung versetzbar ist.

Die Bohranlage umfaßt ferner einen nur schematisch dargestellten Spülungstank 13, in dem sich ein Vorrat an Spülungsmittel 14 befindet, eine (oder mehrere parallel- oder in Serie geschaltete) Spülungspumpe 15, deren Einlaßstutzen 15' in den Spülungsmittelvorrat herabreicht, eine Vorlaufleitung 16, welche die Spülungspumpe 15 mit dem Spülkopf 3 verbindet, und eine Rücklaufleitung 17, welche an einen Sammler 18 am Kopf des Bohrloches 5 angeschlossen ist und in den Spülungstank 13 mündet. Durch die Rücklaufleitung 17 wird Spülungsmittel aus dem Ringraum 19 zwischen der Wandung des Bohrloches und dem Bohrstrang 2 in den Spülungstank 13 überführt.

Im Betrieb fördert die Spülungspumpe 15 Spülungsmittel 14 im Kreislauf in Richtung der Pfeile 20 aus dem Spülungstank 13 abwärts durch das Innere des Bohrstranges 2 und des Bohrkopfes 12 und danach in Richtung der Pfeile 21 aufwärts durch den Ringraum 19 zwischen Bohrstrang 2 und Bohlochwandung und weiter zurück zum Spülungstank 13. Die Spülungspumpe 15 wird durch einen schematisch dargestellten Antriebsmotor 22 mit konstanter Leistung angetrieben und fördert dementsprechend Spülungsmittel 14 in die Vorlaufleitung 16 mit gleichbleibendem Volumenstrom.

An die Vorlaufleitung 16 ist eine in den Spülungstank 13 mündende Abzweigleitung 23 angeschlossen, in die ein Absperrorgan 24 eingeschaltet ist, das von Hand oder mittels irgendeines geeigneten Antriebsmittels 25 betätigbar ist. Der Antrieb 25 kann durch ein elektonisches Steuer- und Kontrollgerät gesteuert werden (in Fig. 1 nicht dargestellt), mit dessen Hilfe sequenzielle Volumenstromveränderungen automatisch vorgenommen werden könne, auf die weiter unten noch eingegangen wird.Mit Hilfe des Absperrorgans 24 kann die Abzweigleitung 23 völlig abgesperrt oder vollständig für den Durchfluß eines Teilstromes von Spülungsmittel freigegeben werden, dessen Strömungsrichtung durch Pfeile 26 versinnbildlicht ist. Dem Absperrorgan 24 ist stromab eine Drossel 27 nachgeordnet, durch die der Maximalwert der durch Öffnen der Abzweigleitung 23 herbeigeführten Volumenstromänderung vorsehbar ist, die in dem hinter dem Verzweigungspunkt gelegenen Teil der Vorlaufleitung 16 und damit im Spülungsmittelkreislauf eintritt.

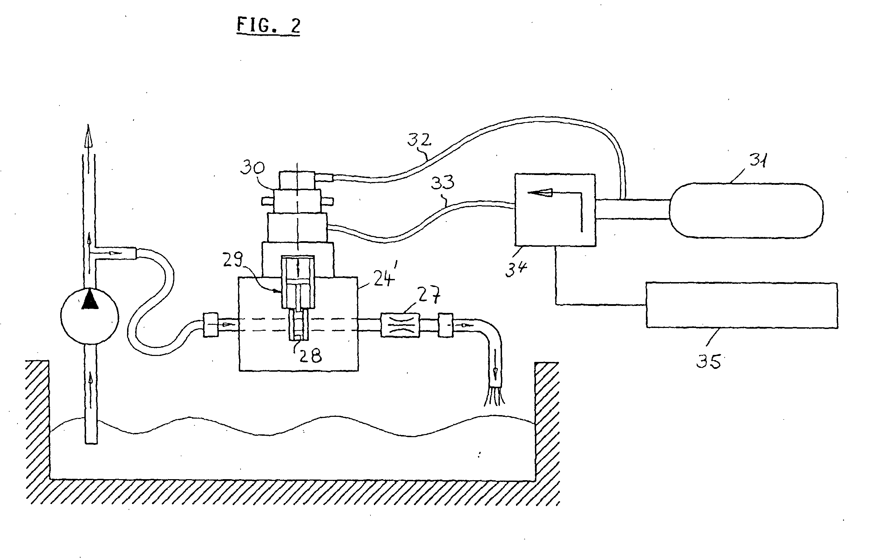

Bei der Ausführung des Absperrorgans 24' gemäß Fig. 2 wird der Absperrkörper 28 von einem Druckmittelantrieb 29 betätigt, der von einem Regelventil 30 mit Druckmittel, beispielsweise Druckluft, aus einem Druckmittelspeicher 31 beaufschlagbar ist. Das Regelventil ist über Druckmittelleitungen 32, 33 mit dem Druckmittelspeicher 31 verbunden, wobei in die Druckmittelleitung 33 ein Schaltventil 34 eingeschaltet ist, das beispielsweise von einer elektronischen Steuer- und Kontrolleinheit 35 gesteuert wird, die vorzugsweise aus einem elektronischen Rechner besteht oder einen solchen umfaßt. Mit Hilfe des Regelventils 30 läßt sich die Öffnungs- und Schließgeschwindigkeit des Absperrkörpers 28 regeln. Gleichzeitig können Zwischenstellungen zwischen der Offen- und der Schließstellung des Absperrkörpers 28 angefahren werden.

Die dargestellte bevorzugte Volumenstromänderung erfolgt obertägig, jedoch kann grundsätzlich die Änderung in jedem Bereich stromab der Pumpe(n) vorgenommen werden, der sich stromauf des untertägigen Sensors befindet, der die Volumenstromänderung erfaßt.

Bei dem dargestellten Ausführungsbeipiel ist im Gehäuse 6 des Bohrwerkzeugs 4 eine von der Spülungsmittelströmung im Bohrstrang 2 beaufschlagte Turbine 36 vorgesehen, deren Leitring 37 fest mit dem Gehäuse 6 verbunden ist und deren Rotor 38 auf einem zentralen, über einen Statorträger- und - Zentrierteil 39 im Gehäuse 6 festgelegten Stützkörper 39 über Lager 40, 41 abgestützt ist, so daß der rotierende Schaufelkranz 42 in Richtung des Pfeils 43 umlaufen kann. Der Turbinenrotor 38 bildet gleichzeitig das Rotorgehäuse eines Generators, der Magnete 44 trägt und ein Wicklungspaket 45 umläuft, das auf dem Stützkörper 39 angebracht ist. Die Ausgangsspannung liegt über eine elektrische Verbindungsleitung 46 an einer schematisch bei 47 angedeuteten elektronischen Verarbeitungseinheit an, die zugleich den Informationsempfänger bildet und beispielsweise Teil eines elektronischen Steuergerätes für das Richtbohrwerkzeug 4 sein kann.

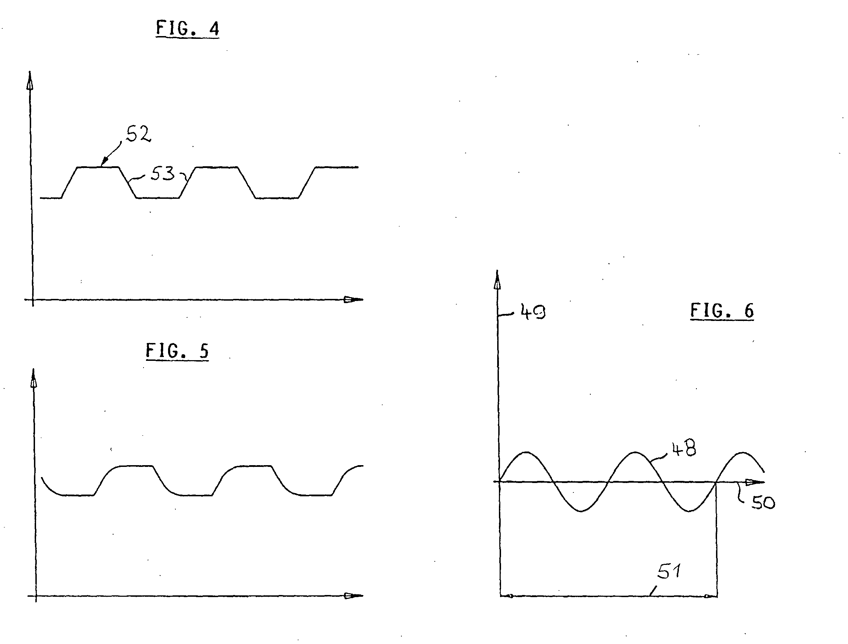

Zur Durchführung eines Informationsübermittlungsvorganges von obertägig vorliegenden Informationen an den untertägigen Informationsempfänger 47 wird während des ununterbrochenen Bohrbetriebs das Absperrorgan 24, 24' im Sinne eines Öffnen der Abzweigleitung 23 betätigt, wodurch in der Spülungsmittelströmung im Bohrstrang 2 und auch im Bereich der Turbine 36 eine Minderung des Volumenstroms eintritt, die eine Verringerung der Drehzahl des Rotors 38 der Turbine 36 zur Folge hat. Diese Drehzahländerung, die der Volumenstromänderung proportional ist, wird vom Informationsempfänger 47 als Signal erfaßt, der beispielsweise die Nulldurchgänge in Fig. 6 dargestellten Wicklungsspannungskurve 48 über der Zeit pro Zeiteinheit zählt. In Fig. 6 ist die Wicklungsspannung der Ordinate 49 und die Zeit der Abzisse 50 des Koordinatenkreuzes zugeordnet, und die Zeitspanne 51 entspricht der einer vollen Umdrehung des Turbinen/Generatorrotors 38.

Durch Schließen des Absperrorgans 24, 24' erhöht sich der Volumenstrom des Spülungsmittels 14 im Bereich der Turbine 36 mit der Folge, daß die Erhöhung vom Infomationsempfänger 47 als weiterverarbeitbares Signal verstanden wird.

Anstelle der bevorzugten Turbinen/Generator-Kombination, die in vielen Anwendungsfällen zur Versorgung untertägiger Verbraucher ohnehin benötigt wird, kann auch jedes anderes geeignete Volumenstrommeßgerät Anwendung finden. Auch kann anstelle eines Generators auch irgendein anderer Drehzahlsensor der Turbine zugeordnet sein, beispielsweise solche, die nach dem Lochscheiben- oder Fliehkraftprinzip arbeiten.

Entsprechend der Art der Betätigung und der Ausgestaltung des Absperrorgans kann den Volumenstromänderungen ein pulsförmiger Verlauf vorgegeben werden, wie er beispielsweise durch den Kurvenzug 52 in Fig. 4 veranschaulicht wird, die die Änderung des Volumenstroms über der Zeit veranschaulicht.

Der Verlauf bzw. die Steilheit der Pulsflanken 53 hängt dabei von der Art und der Geschwindigkeit ab, mit der der Absperrkörper der Absperrorgans 24, 24' betätigt wird. Entsprechend den Volumenstromänderungen ändert sich auch die Generatorspannung, wie das der Fig. 5 entnommen werden kann, in der die Generatorspannung über der Zeit beispielhaft aufgetragen ist.

Zur Variation des Pulsverlaufes kann der Zeitraum zwischen dem Beginn und dem Ende einer Teilstromabzweigung, der Anteil des abgezweigten Teilstroms an dem von der Spülungspumpe 15 gelieferten Spülungsmittelgesamtstrom und/oder der zeitliche Verlauf variiert werden, mit der die Abzweigung von Spülungsmittel begonnen und/oder beendet wird. Bevorzugt stellen die Volumenstromänderungen als digitale Folge codierte Signale dar, die beliebige gewünschte Folgeaktionen auslösen können.

Die Informationsübertragung ist von der Art der Information, die übertragen werden soll, unabhängig. Es können sowohl Steuersignale für ein Richtbohrwerkzeug, Signale zum Umschalten von Betriebsmodi einzelner Komponenten des Untertagesystems, Teufeninformationen, Stopp- und Startsignale an einen untertägigen Sender etc. übertragen werden, so daß die erfindungsgemäße Informationsübertragung universellen Einsatz finden kann. Bei Ausbildung des Steuergerätes als elektronischer Rechner besteht auch die Möglichkeit zu automatischen Informationsaustauschvorgängen im Sinne einer automatischen Reaktion auf den Informationsinhalt empfangener Daten.

## Patentansprüche

1. Verfahren zur Übertragung von obertägig vorliegenden Informationen an einen in einem Bohrloch untertage befindlichen Informationsempfänger, insbesondere ein Empfangsgerät in einem Bohrwerkzeug, während des Bohrbetriebs, bei dem von zumindest einer obertägigen Spülungspumpe ein Spülungsmittel im Kreislauf aus einem Spülungstank abwärts durch das Innere eines Bohrstranges und eines Bohrkopfes und aufwärts im Ringraum zwischen Bohrstrang und Bohrlochwandung und weiter zum Spülungstank umgepumt, zur Informationsübermittlung der Volumenstrom des Spülungsmittels verändert und die Veränderung vom Informationsempfänger erfaßt und ausgewertet wird, **dadurch gekennzeichnet**, daß der von der Spülungspumpe erzeugte Volumenstrom des Spülungsmittels in einem stromab der Spülungspumpe gelegenen Bereich verändert wird.

2. Verfahren nach Anspruch 1, **dadurch gekennzeichnet,** daß der Volumenstrom durch Abzweigung eines Teilstromes von dem von der Spülungspumpe erzeugten Volumenstrom des Spülungsmittels verändert wird.

3. Verfahren nach Anspruch 2, **dadurch gekennzeichnet,** daß der abgezweigte Teilstrom in den Spülungstank rückgeführt wird.

4. Verfahren nach einem der Ansprüche 1 bis 3, **dadurch gekennzeichnet**, daß der Zeitraum zwischen dem Beginn und dem Ende einer Teilstromabzweigung variiert wird.

5. Verfahren nach einem der Ansprüche 1 bis 4, **dadurch gekennzeichnet**, daß der Anteil des abgezweigten Teilstroms an dem von der Spülungspumpe gelieferten Spülungsmittelgesamtstrom variiert wird.

6. Verfahren nach einem der Ansprüche 1 bis 5, **dadurch gekennzeichnet**, daß am Beginn und/oder am Ende eines Abzweigungsvorganges der Anteil des abgezweigten Teilstroms am Spülungsmittelgesamtstrom stufenlos oder in mehreren Stufen von Null auf Maximalwert erhöht bzw. von Maximalwert auf Null vermindert wird.

7. Vorrichtung zur Übertragung von obertägig vorliegenden Informationen an einen in einem Bohrloch untertage befindlichen Informationsempfänger (47), insbesondere ein Empfangsgerät in einem Bohrwerkzeug (4), während des Bohrbetriebs, mit einem Spülungstank (13), zumindest einer Spülungspumpe (15), einer an die Spülungspumpe (15) angeschlossenen, zum oberen Ende des Bohrstranges (2) führenden Vorlaufleitung (16) und einem auf Änderungen des Volumenstroms im Bohrstrang (2) ansprechenden, dem Informationsempfänger zugeordneten Sensor, **dadurch gekennzeichnet,** daß an die Vorlaufleitung (16) eine von einem Absperrorgan (24;24') gesteuerte Abzweigleitung (23) angeschlossen und als Sensor ein Volumenstrommeßgerät (36,38,44,45) vorgesehen ist.

8. Vorrichtung nach Anspruch 7, **dadurch gekennzeichnet,** daß als Volumenstrommeßgerät eine von der Spülungsmittelströmung im Bohrstrang (2) beaufschlagte, im Gehäuse (6) des Bohrwerkzeugs angeordnete Turbine (36) vorgesehen ist, deren Rotor (38) mit einem dessen Drehzahl erfassenden Meßwertgeber gekoppelt ist.

9. Vorrichtung nach Anspruch 7, **dadurch gekennzeichnet,** daß als Meßwertgeber ein vom Rotor (38) der Turbine (36) angetriebener Generator (44,45) vorgesehen ist, dessen Ausgangsspannung in einer Relation zum Volumenstrom steht.

10. Vorrichtung nach einem der Ansprüche 7 bis 9, **dadurch gekennzeichnet**, daß der Absperrkörper (28) des Absperrorgans (24,24') in der Abzweigleitung (23) von einem durch ein elektronisches Steuergerät steuerbaren Antrieb (25;29) betätigbar ist.

11. Vorrichtung nach Anspruch 10, **dadurch gekennzeichnet,** daß als Antrieb ein von einem Regelventil (30) mit Druckmittel beaufschlagbarer Druckmittelantrieb (29) vorgesehen ist.

12. Vorrichtung nach Anspruch 11, **dadurch gekennzeichnet,** daß das Regelventil (30) an eine Druckluftquelle (31) angeschlossen und in einer Anschlußleitung (33) ein vom elektronischen Steuergerät (35) betätigbares Schaltventil (34) angeordnet ist.

13. Vorrichtung nach einem der Ansprüche 10 bis 12, **dadurch gekennzeichnet,** daß als Steuergerät ein elektronischer Rechner vorgesehen ist.

14. Vorrichtung nach einem der Ansprüche 7 bis 13, **dadurch gekennzeichnet**, daß in der Abzweigleitung (23) stromab des Absperrorgans (24;24')eine Drossel (27) angeordnet ist.

15. Vorrichtung nach einem der Ansprüche 7 bis 14, **dadurch gekennzeichnet,** daß die Abzweigleitung (23) in den Spülungstank (13) mündet.

## Claims

1. A method of transmitting data present at the surface to a data receiver disposed underground in a bore hole, in particular a receiver unit in a drilling implement, during drilling operations, and in which at least one surface-mounted drilling mud pump pumps a circulating medium around in a circuit from a drilling mud tank downwards through the interior of a drill line and a drill head and upwards in the annular space between drill line and bore hole wall and on to the drilling mud tank, the volumetric flow of circulating medium being altered in order to transmit data and the alteration being detected and evaluated by the data receiver, characterised in that the volumetric flow of circulating medium generated by the drilling mud pump is altered in a zone situated downstream of the said pump.

2. A method according to claim 1, characterised in that the volumetric flow is altered by branching a partial flow from the volumetric flow of circulating medium which is generated by the drilling mud pump.

3. A method according to claim 2, characterised in that the branched-off partial flow is fed back to the drilling mud tank.

4. A method according to one of claims 1 to 3, characterised in that the length of time between the start and finish of a partial flow being branched off is varied.

5. A method according to one of claims 1 to 4, characterised in that the branched-off partial flow is varied in its proportion of the total flow of circulating medium which is delivered by the drilling mud pump.

6. A method according to one of claims I to 5, characterised in that at the start and/or at the end of a branching-off process the proportion of the total flow of circulating medium which is represented by the branched-off partial flow is increased from zero to maximum or is reduced from maximum to zero, in either case steplessly or in several stages.

7. An apparatus tor transmitting data available on the surface to a data receiver (47), particularly a receiver unit in a drilling tool (3) disposed underground in a bore hole, during drilling operations, with a drilling mud tank (13), at least one drilling mud pump (15), a main pipe (16) connected to the drilling mud pump (15) and leading to the top end of the drill line (2) and a sensor associated with the data receiver and responding to variations in the volumetric flow in the drill line (2), characterised in that a branch pipe (23) controlled by a shut-off valve (24, 24') is connected to the main pipe (16), and a volumetric flow meter (36, 38, 44, 45) is provided as sensor.

8. An apparatus accarding to claim 7, characterised in that the volumetric flow meter provided is a turbine (36) disposed in the housing (6) of the drilling tool and subject
to the flow of circulating medium in the drill line (2) and of which the rotor (38) is coupled to a measured value transmitter which detects the rotary speed of said rotor.

9. An apparatus according to claim 7, characterised in that the measured value transmitter provided is a generator (44, 45) driven by the rotor (38) of the turbine (36) and the output voltage of which is related to the volumetric flow.

10. An apparatus according to one of claims 7 to 9, characterised in that the shut off member (28) of the shut off valve (24, 24') in the branch pipe (23) can be actuated by a drive (25, 29) adapted to be controlled by an electronic control

11. An apparatus according to claim 10, characterised in that the drive provided is a pressurised medium drive (29) subject to the action of a pressurised medium exerted by a control valve (30).

12. An apparatus according to claim 11, characterised in that the control valve (30) is connected to a compressed air source (31) and in that a switching valve (34) adapted to be actuated by an electronic control device (35) is disposed in a connecting line (33).

13. An apparatus according to one of claims 10 to 12, characterised in that an electronic computer is provided as the control device.

14. An apparatus according to one of claims 7 to 13, characterised in that a throttle (27) is disposed in the branch pipe (23) downstream of the shut off valve (24, 24').

15. An apparatus according to one of claims 7 to 14, characterised in that the branch pipe (23) discharges into the drilling mud tank (13).

## Revendications

1. Procédé de transmission d'informations présentes en surface à un récepteur d'informations se trouvant au fond d'un trou de forage, en particulier un récepteur dans un outil de forage, au cours de l'opération de forage, dans lequel un agent d'injection est pompé en circuit par au moins une pompe à boue située en surface d'un réservoir à boue vers le bas à travers l'intérieur d'un train de tiges de forage et d'une tête de forage et vers le haut dans l'espace annulaire compris entre le train de tiges de forage et la paroi du trou du forage et ensuite vers le réservoir à boue, le débit volumétrique d'agent d'injection est modifié lors de la transmission d'informations et la modification est captée et exploitée par le récepteur d'informations, caractérisé en ce que le débit volumétrique de l'agent d'injection produit par la pompe à boue est modifié dans une zone située en aval de la pompe à boue.

2. Procédé selon la revendication 1, caractérisé en ce que le débit volumétrique est modifié par dérivation d'un débit partiel du débit volumétrique de l'agent d'injection produit par la pompe à boue.

3. Procédé selon la revendication 2, caractérisé en ce que le débit partiel dérivé est renvoyé dans le réservoir à boue.

4. Procédé selon l'une quelconque des revendications 1 à 3, caractérisé en ce que l'intervalle de temps compris entre le début et la fin d'une dérivation de débit partiel est modifié.

5. Procédé selon l'une quelconque des revendications 1 à 4, caractérisé en ce que la fraction du débit partiel dérivé est modifiée par rapport au débit total d'agent d'injection délivré par la pompe à boue.

6. Procédé selon l'une quelconque des revendications 1 à 5, caractérisé en ce qu'au début et/ou à la fin d'une opération de dérivation, la fraction du débit partiel dérivé par rapport au débit total d'agent d'injection est augmentée graduellement ou par plusieurs étapes de la valeur zéro à la valeur maximale ou selon le cas est réduite de la valeur maximale à zéro.

7. Dispositif de transmission d'informations présentes en surface à un récepteur d'informations (47) se trouvant au fond d'un trou de forage, en particulier un récepteur dans un outil de forage (4), au cours de l'opération de forage, avec un réservoir à boue (13), au moins une pompe à boue (15), une conduite d'amenée (16) raccordée à la pompe à boue (15) et menant à l'extrémité supérieure du train de tiges de forage (2) et un capteur affecté au récepteur d'informations et sensible à des modifications du débit volumétrique dans le train de tiges de forage (2), caractérisé en ce qu'une conduite de dérivation (23) commandée par un organe d'arrêt (24; 24') est raccordée à la conduite d'amenée (16) et en ce qu'il est prévu comme capteur un appareil de mesure de débit volumétrique (36, 38, 44, 45).

8. Dispositif selon la revendication 7, caractérisé en ce qu'il est prévu comme appareil de mesure de débit volumétrique une turbine (36) agencée dans le boîtier (6) de l'outil de forage et alimentée par l'écoulement d'agent d'injection dans le train de tiges de forage (2), turbine dont le rotor (38) est couplé à un capteur de mesure enregistrant son nombre de tours.

9. Dispositif selon la revendication 7, caractérisé en ce qu'il est prévu comme capteur de mesure un générateur (44, 45) entraîné par le rotor (38) de la turbine (36), dont la tension de sortie est en rapport avec le débit volumétrique.

10. Dispositif selon l'une quelconque des revendications 7 à 9, caractérisé en ce que le corps d'arrêt (28) de l'organe d'arrêt (24, 24') dans la conduite de dérivation (23) peut être actionné par un entraînement (25; 29) qui peut être commandé par un appareil de commande électronique.

11. Dispositif selon la revendication 10, caractérisé en ce qu' il est prévu comme entraînement un entraînement par un agent sous pression (29) qui peut être alimenté en agent sous pression au moyen d'une soupape de réglage (30).

12. Dispositif selon la revendication 11, caractérisé en ce que la soupape de réglage (30) est raccordée à une source d'air comprimé (31) et une soupape de commutation (34) qui peut être actionnée par l'appareil de commande électronique (35) est agencée dans une conduite de raccordement (33).

13. Dispositif selon l'une quelconque des revendications 10 à 12, caractérisé en ce qu'il est prévu comme appareil de commande un calculateur électronique.

14. Dispositif selon l'une quelconque des revendications 7 à 13, caractérisé en ce qu'un étranglement (27) est agencé dans la conduite de dérivation (23) en aval de l'organe d'arrêt (24; 24').

15. Dispositif selon l'une quelconque des revendications 4 à 14, caractérisé en ce que la conduite de dérivation (23) débouche dans le réservoir à boue (13).
